# EUROPÄISCHE PATENTSCHRIFT

(11) **EP 0 649 719 B1**
(45) Veröffentlichungstag und Bekanntmachung des Hinweises auf die Patenterteilung: **01.10.1997**
(21) Anmeldenummer: 94116926.0
(22) Anmeldetag: 26.10.1994
(51) Int. Cl.: B29C 45/14, G06K 19/077

(54) **Verfahren zur Herstellung von Chipkarten mittels Spritzgiessen**
Method for manufacturing chip cards by injection moulding
Procédé de fabrication de cartes à puce par moulage par injection

(30) Priorität: 26.10.1993 DE 4336505
(43) Veröffentlichungstag der Anmeldung: 26.04.1995
(73) Patentinhaber: SIEMENS AKTIENGESELLSCHAFT, 80333 München (DE)
(72) Erfinder: Götzendorfer. Ludwig-Werner, Dipl.-Ing. (FH), D-74906 Bad Rappenau (DE); Schmidt, Hans-Friedrich, Dr. Ing., D-82547 Eurasburg (DE)

(56) Entgegenhaltungen:
- EP-A- 0 340 099
- EP-A- 0 340 100
- PATENT ABSTRACTS OF JAPAN vol. 15, no. 8 (M-1067) 9. Januar 1991 & JP-A-02 258 395 (RHYTHM WATCH CO)
- PATENT ABSTRACTS OF JAPAN vol. 15, no. 105 (M-1092) 13. März 1991 & JP-A-03 001 992 (ASAHI CHEM IND CO)

## Beschreibung

Die Erfindung betrifft die Herstellung von Chipkarten, die aus einem flexiblen Kartenkörper und einem integrierten elektronischen Modul als Datenträger bestehen. Dabei sind elektrische Anschlußflächen an einer flächig ausgebildeten Seite des Kartenkörpers vorhanden, die von außen abgreifbar sind.

Die wirtschaftliche Herstellung von Chipkarten mit einem integrierten Modul ist von großem Interesse. Eines der zahlreichen Verfahren dieser Art sieht vor, daß eine extrudierte Platte durch Fräsen mit einer Kavität für das elektronische Modul hergestellt wird. In diesem Fall wird ein elektronisches Modul verwendet, das aus einer Epoxidleiterplatte mit Durchkontaktierungen, elektrischen Anschlußflächen und einem Halbleiterbauelement mit entsprechender Harzabdeckung besteht. Das Modul wird in die Kavität eingesetzt und entsprechend verklebt. Anstelle einer extrudierten Platte können auch spritzgegossene Kunststoffkarten mit entsprechenden Kavitäten Verwendung finden.

Aus der europäischen Patentschrift EP 0 267 826 ist ein Verfahren zur Herstellung einer Karte mit elektronischem Speicher bekannt, die einen Kartenkörper mit Biegeeigenschaften aufweist, die der ISO-Norm genügen. Nach dem Spritzgießen des Kartenkörpers mit der Kavität wird das elektronische Speicherbauteil in dieser Vertiefung eingesetzt und am Kartenkörper befestigt.

Die europäische Patentanmeldung EP 0 340 100 betrifft ein Verfahren zur Herstellung von Chipkarten, bei welchem die an der Unterseite eines Trägers fixierten Module mit Hilfe des Trägers in die Spritzgießform eingebracht und dort positioniert werden. Ein wesentliches Merkmal dieses Verfahrens betrifft die Trennung zwischen Träger und Chipkarte nach dem Spritzgießen. Weiterhin wird eine Variante beschrieben, bei der das Trägerelement die Flächenabmessungen der Chipkarte aufweist und der nach dem Spritzgießen integraler Bestandteil der Chipkarte ist. Dabei wird auf dem Träger einseitig ein Halbleiterchip befestigt und gegenüberliegend auf der anderen Seite eine bestimmte Anzahl elektrischer Anschlußflächen angebracht, die mit elektrisch leitenden Verbindungen mit dem Halbleiterchip verbunden werden. Dieses so vorbereitete Trägerelement wird mit der Seite, auf der sich die elektrischen Anschlußflächen befinden, an eine Innenwand einer Spritzgießform gelegt, womit der Chip positioniert ist. Beim Spritzgießen wird die gegenüberliegende Seite mit dem Chip mit Kunststoff umhüllt und somit die Karte hergestellt. Das Trägerelement und der eingespritzte Kunststoff haften dabei aneinander.

Bei allen Verfahren besteht die Notwendigkeit, das elektronische Modul relativ zum Spritzgießwerkzeug und damit auch relativ zur herzustellenden Chipkarte zu positionieren. Darüber hinaus kann über einen abtrennbaren Teil eines Trägers eine grafische Einheit beim Spritzgießen auf die Chipkarte aufgebracht werden.

Der Erfindung liegt die Aufgabe zugrunde, ein Spritzgießverfahren zur Herstellung von Chipkarten bereitzustellen, mittels dem eine schnelle und exakte Positionierung des elektronischen Modules im Spritzgießwerkzeug, sowie eine insgesamt geringe Taktzeit erzielbar sind.

Die Lösung dieser Aufgabe geschieht durch den Gegenstand des Anspruches 1.

Vorteilhafte Ausgestaltungen sind den Nebenansprüchen zu entnehmen.

Der Erfindung liegt die Erkenntnis zugrunde, das die Erzielung einer hohen Produktionsrate, verbunden mit einer geringen Taktzeit für die Herstellung einer Chipkarte im Spritzgießverfahren durch den Einsatz eines aus einem Thermoplasten bestehenden Trägerbandes, auf das in definiertem Abstand hintereinander vorgefertigte elektronische Module mit elektrischen Anschlußflächen montiert sind, erreichbar ist. Dadurch werden zeitaufwendige Verfahrensschritte, wie Einlegen eines vorgefertigten Trägers mit einem darauf befindlichen elektronischen Modul in ein Spritzgießwerkzeug oder Entnahme eines beim Spritzgießen nicht in die Chipkarte integrierten oder anhaftenden Teiles des Trägers vermieden. Eine Fixierung des elektronischen Modules im Spritzgießwerkzeug, die später der Positionierung des elektronischen Modules innerhalb der Chipkarte entspricht, kann über eine Vorspannung am Trägerband geschehen, so daß die Anschlußflächen des Modules an einer flächigen Wand eines Spritzgießwerkzeuges anliegen. Das elektronische Modul ist dauerhaft mit dem thermoplastischen Trägerband verklebt. Das Trägerband besteht aus einem Material aus der gleichen Werkstoffgruppe wie das im Spritzgießverfahren eingespritzte thermoplastische Material, so daß beim Spritzgießvorgang das Trägerband mit dem spritzgegossenen Kartenkörper verschmilzt und integraler Bestandteil desselben wird. Eine schnelle und genaue Plazierung des Modules ist durch den Einsatz des Trägerbandes gewährleistet. Das mit elektronischen Modulen vormontierte Trägerband wird dem Spritzgießprozeß in längeren Einheiten zugeführt. So kann an einer Standardspritzgießmaschine zur Herstellung einer Chipkarte jeweils ein Abschnitt des Trägerbandes mit einem darauf befindlichen elektronischen Modul in ein geöffnetes Spritzgießwerkzeug eingezogen, positioniert und gespannt werden. Nach dem Spritzgießvorgang bei geschlossenem Spritzgießwerkzeug kann die in der Regel noch mit dem Trägerband verbundene Chipkarte schnell aus dem Spritzgießwerkzeug entnommen werden, so daß dieses vollständig leer ist und der nächste Takt augenblicklich folgen kann. Dazu wird das Trägerband weitertransportiert, bis sich das nächste darauf befindliche Modul im Spritzgießwerkzeug befindet, dort positioniert wird, das Trägerband gespannt wird und der nächste Spritzgießvorgang erfolgen kann.

Das entsprechend der Erfindung eingesetzte Trägerband ist geringfügig breiter als ein elektronisches Modul mit seinen nach außen überstehenden elektrischen Anschlußflächen im Grundriß betrachtet. Das Trägerband deckt allerdings nicht die vollständige Breite einer Chipkarte ab. Notwendig ist jedoch, daß die elektrischen Anschlußflächen, deren Unterseite an einer flächigen Wand des Spritzgießwerkzeuges anliegen, von oben her abgedeckt sind. Nachdem die Einspritzung des in der Regel auf eine Temperatur zwischen 200 und 300 °C erwärmten Thermoplasten von einer schmalen Seite der Kavität des Spritzgießwerkzeuges geschieht, besteht die Gefahr, daß bei dem notwendigen hohen Einspritzdruck die Anschlußflächen des Modules verbogen werden, wenn sie nicht von oben durch den Träger geschützt werden.

Dadurch, daß das Trägerband integraler Bestandteil der Chipkarte wird, spricht man von einem verlorenen Träger. Die Materialstärke des Trägerbandes ist sehr gering, so daß man auch von einer Trägerfolie sprechen könnte. Durch spezielle Auswahl der Folie, z.B. durch Verwendung von elastifizierten Typen, können die auftretenden Übergangsspannungen von den relativ starren elektrischen Anschlußflächen (Leadframe) zum weicheren Thermoplasten der Chipkarte herabgesetzt werden.

Im folgenden werden anhand von schematischen Figuren Ausführungsbeispiele beschrieben.
Figur 1 zeigt ein Spritzgießwerkzeug mit einem eingelegten Trägerband mit elektronischem Modul und der Kavität entsprechend der Form der Chipkarte,
Figur 2 zeigt ein Spritzgießwerkzeug entsprechend Figur 1, wobei die Kavität mit einem Polycarbonat ausgespritzt ist,
Figur 3 zeigt einen Ausschnitt aus Figur 2 mit detaillierter Darstellung des elektronischen Modules und seiner Umgebung,
Figur 4 zeigt eine Darstellung entsprechend Figur 3 mit einer abgewandelten Vormontage des Modules auf dem Trägerband.

Entsprechend der Erfindung wird für die wirtschaftliche Herstellung von Chipkarten 1 durch Spritzgießen ein vormontiertes, mit elektronischen Modulen 2 versehenes Trägerband 4 eingesetzt. Die verwendeten Module 2 bestehen aus einem Halbleiter, der auf einem Leadframe montiert ist und über Bonddrähte elektrisch angeschlossen ist. Die gesamte Anordnung ist mit einer Epoxidpreßmasse umhüllt. An diesem in der Regel quaderförmigen Modul 2 befinden sich somit an seiner Unterseite flächig ausgebildete Kontakte, die hier als elektrische Anschlußflächen 3 bezeichnet werden. Diese stehen wesentlich seitwärts über, bedecken meistens die Unterseite des Modules und sind umlaufend angeordnet. Die Unterseite der Anschlußflächen 3 ist an einer fertigen Chipkarte 1 auf deren Zugriffsseite sichtbar und liegt in der Regel planparallel in deren Oberfläche.

Ein derartiges elektronisches Modul 2 wird mit seiner Oberseite auf einer Thermoplastfolie, die vorzugsweise aus Polycarbonat besteht, durch Klebung befestigt. Dieses Trägerband 4 mit dem Modul 2 wird im Spritzgießwerkzeug 7 eingelegt und mit einem leicht fließenden Thermoplasten der gleichen Werkstoffgruppe, d.h. auch mit einem Polycarbonat, umhüllt. Bei diesem Prozeß verschmilzt das Trägerband 4 mit dem spritzgegossenen Thermoplastformteil 6.

Die bisher nicht bekannte Verwendung eines Polycarbonates (PC) für eine Chipkarte 1 bietet besondere Vorteile. PC zeichnet sich durch hohe Zähigkeit und Steifigkeit bei Raumtemperatur aus. Nachdem beim Umspritzen eines thermoplastischen Trägerbandes 4 und beim folgenden Erstarren des gesamten Kartenkörpers Spannungen auftreten, ist ein diesbezüglich möglichst isotropes Werkstoffverhalten gewünscht. Mit PC läßt sich dies erreichen. Darober hinaus kann PC problemlos im niedrigviskosen Zustand gespritzt werden.

Die Form des kostenintensiven Trägerbandes 4 ist so gehalten, daß eine mindestens notwendige Breite zur Überdeckung der Oberseite des Modules 2 mit seinen elektrischen Anschlußflächen 3 gegeben ist, jedoch nicht die vollständige Breite einer Chipkarte 1 überdeckt ist. Mittels des Trägerbandes 4 werden die elektronischen Module 2 in das Spritzgießwerkzeug 7 transportiert, in der Kavität 8 des Spritzgießwerkzeuges 7 positioniert und durch Einspannen mittels des Trägerbandes 4 fixiert. Durch die großflächige Abdeckung der Oberseite der elektrischen Anschlußflächen 3 durch das Trägerband 4 wird sichergestellt, daß die Kontaktflächen beim Spritzgießen nicht verbogen werden.

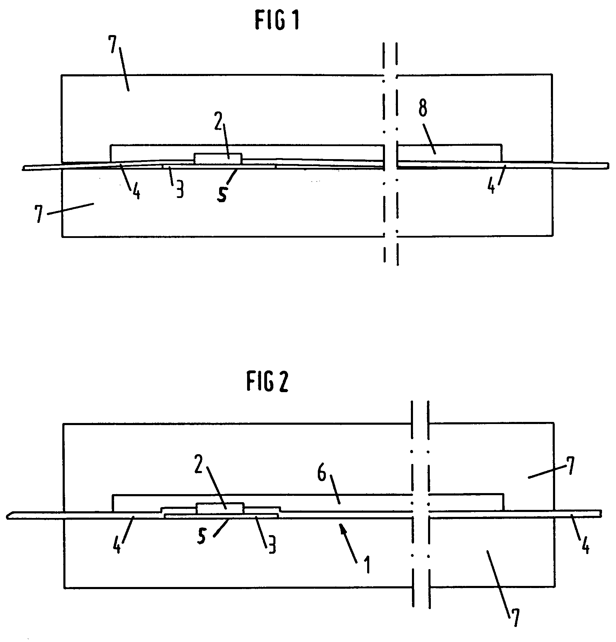

In Figur 1 ist ein Spritzgießwerkzeug 7 dargestellt, das aus einem oberen und einem unteren Teil besteht. In geöffnetem Zustand wird das Trägerband 4 mit dem elektronischen Modul 2 soweit eingezogen, bis das Modul 2 an einem vorgegebenen Platz fixiert werden kann. Zu dieser Zeit liegt die Unterseite der elektrischen Anschlußflächen 3 bzw. die Unterseite des elektronischen Modules 2 an der Innenfläche der im Spritzgießwerkzeug entsprechend der Form einer Chipkarte 1 gebildeten Kavität 8 an. Die Zuführung des mit Modulen 2 vormontierten Trägerbandes 4 kann von verschiedenen Richtungen aus geschehen. In der Darstellung entsprechend Figur 1 geschieht dies in bezug auf die Geometrie einer Chipkarte 1 in Längsrichtung. Einspritzöffnungen für den eigentlichen Spritzgießvorgang sind in den Figuren 1 und 2 nicht dargestellt.

Die Einspritzung des Thermoplasten zur Herstellung des spritzgegossenen Formteiles 6 geschieht über eine oder mehrere Einspritzöffnungen, die an den Schmalseiten der Kavität 8 angeordnet sind. In der Figur 1 ist angedeutet, daß das Trägerband 4 die elektrischen Anschlußflächen 3 nicht seitwärts umhüllt. Diese Umhüllung geschieht erst, nachdem während des Einspritzvorganges das Trägerband 4 erwärmt bzw. angeschmolzen wurde. In diesem Zusammenhang ist zu bemerken, daß nicht der gesamte Teil des im Spritzgießwerkzeug 7 befindlichen Trägerbandes 4 aufgeschmolzen wird. Vielmehr wird es oberflächlich angeschmolzen und verbindet sich mit dem spritzgegossenen Formteil 6.

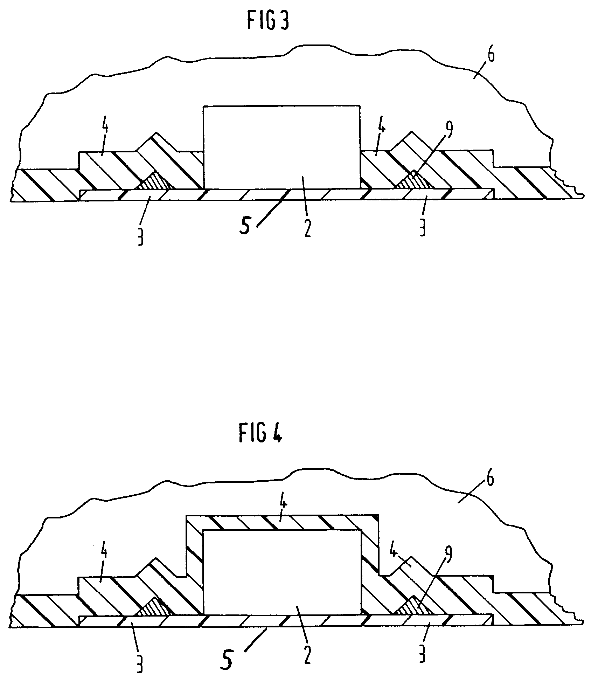

In den Figuren 1 und 2 sind jeweils vormontierte Module 2 entsprechend der Figur 3 dargestellt. Die Figuren 3 und 4 sind Ausschnittsdarstellungen einer fertig ausgebildeten Chipkarte 1. Es wird jeweils eine Version einer Vormontage von Modulen 2 auf einem Trägerband 4 angedeutet. So ist in der Figur 3 zur Vormontage ein dem Grundriß des zentralen Körpers des Modules 2 entsprechendes Loch eingestanzt worden. Das Modul 2 ist mit seinem Kunststoffkörper hindurchgeführt, bis die Oberseiten der Anschlußflächen 3 am Trägerband 4 anliegen und verklebt werden. Diese Verbindung kann mittels eines flächig aufgebrachten Klebstoffes beispielsweise im Siebdruckverfahren oder über ein Klebstoffdepot 9 erzeugt werden. Wichtig ist, daß die Verschmutzung von Kontaktflächen durch überschüssigen Klebstoff vermieden wird. Die elektrischen Anschlußflächen 3 eines nur vormontierten Modules 2 sind noch nicht seitwärts an den schmalen Stirnseiten von dem Trägerband 4 abgedeckt. Die Darstellung entsprechend der Figuren 3 und 4 liegt bei einer fertigen Chipkarte 1 vor. Die nach oben weisende Kontur des Trägerbandes 4 ist im Bereich des Modules 2 und der Anschlußflächen 3 wie zur Zeit der Vormontage dargestellt. Beim Hinterspritzen eines aus Polycarbonat hergestellten Trägerbandes 4 mit einem Modul 2 in einem Spritzgießwerkzeug 7 wird das Trägerband 4 zumindest teilweise angeschmolzen und verbindet sich mit dem spritzgegossenen Formteil 6. Das Trägerband 4 hat insgesamt mehrere Funktionen. Dazu gehören zunächst die Träger- und Positionierfunktionen für das Modul 2, des weiteren die Schutzfunktion für die elektrischen Anschlußflächen 3 (Leadframe) durch deren Abdeckung beim Spritzgießvorgang und außerdem werden das Modul 2 und die elektrischen Anschlußflächen 3 über das Trägerband 4 in die Chipkarte 1 integriert.

Die Figur 4 unterscheidet sich von der Figur 3 durch eine andere Art der Vormontage des Modules 2. In dieser Darstellung ist zu erkennen, daß das Modul 2 nach oben und seitwärts von dem Trägerband 4 umhüllt ist. Dies geschieht, die Stirnseiten der elektrischen Anschlußflächen 3 ausgenommen, bei der Vormontage des Modules 2 auf dem Trägerband 4 durch ein Tiefziehverfahren. Dabei wird zur Chipaufnahme die Trägerfolie 4 durch thermische Verformung an die Chipkontur angepaßt.Die Stärke des Trägerbandes 4 liegt im Bereich zwischen 25 und 50 µm.

Mittels des erfindungsgemäßen Verfahrens läßt sich eine schnellere und genauere Plazierung der Chips im Spritzgießwerkzeug 7 bei gleichzeitiger Verkürzung der Zykluszeiten von ca. 10 auf 6 s erreichen. Die fertige Chipkarte 1 ist in einfacher Weise aus dem Werkzeug zu entnehmen und einer Weiterverarbeitung zuzuführen. Das Trägerband 4 kann in Form eines Endlosbandes der Spritzgießmaschine zugeführt werden. Ein besonderer Vorteil der Erfindung liegt in der Möglichkeit, Standardspritzgießmaschinen einsetzen zu können. Bei diesen kostengünstigen Maschinen wird das Trägerband 4 beispielsweise senkrecht stehend zugeführt, so daß die elektrischen Anschlußflächen entweder nach links oder nach rechts zeigen. Die Positionierung des Modules 2 erfolgt auf einer senkrecht stehenden flächigen Innenwand des Spritzgießwerkzeuges 7, die der Darstellung in den Figuren 1 und 2 unter dem Modul 2 liegt. Das in den Figuren oben liegende Teil des Spritzgießwerkzeuges 7 fährt in dem Fall entsprechend von der gegenüberliegenden Seite in ebener Richtung auf das zuerst genannte Teil des Spritzgießwerkzeuges 7 zu, an dem das Modul 2 positioniert ist. Dadurch bildet sich die umschlossene Kavität 8, wobei die fertig gespritzte Chipkarte 1 senkrecht steht und ihre flächigen Seiten seitwärts zeigen.

Die gewählte Form des Trägerbandes 4 als schmale Folie, die über die Anschlußflächen 3 geringfägig nach außen übersteht, hat demnach nicht die flächige Form der zu erzeugenden Chipkarte. Nachdem die Folienherstellung relativ teuer ist, liegt darin ein wesentlicher Kostenfaktor. Obwohl das Trägerband 4 einen sog. verlorenen Träger darstellt, ist diese Verwendung jedoch zweckmäßig, da der Weitertransport der Chipkarte 1 nach ihrer Herstellung, verbunden mit der Entnahme aus dem Spritzgießwerkzeug 7 in einfacher Weise erfolgen kann.

## Patentansprüche

1. Verfahren zur Herstellung von Chipkarten (1) mittels Spritzgießen, wobei die Chipkarten (1) aus einem flexiblen Kartenkörper mit integriertem elektronischen Modul (2) als Datenträger bestehen und von außen zugängliche elektrische, mit dem Modul (2) verbundene Anschlußflächen (3) aufweisen, die an der Oberfläche einer flächig ausgebildeten Seite des Kartenkörpers an einer vorgegebenen Position plaziert sind, bestehend aus folgenden Schritten:
- Montage von gehäusten elektronischen Modulen (2) mit an deren Unterseite (5) oder im unteren Bereich angebrachten und seitwärts hervorstehenden elektrischen Anschlußflächen (3) auf einem aus einem Thermoplasten bestehenden Trägerband (4), wobei das Modul (2) relativ zum Trägerband (4) positioniert ist und die nach unten zeigenden elektrischen Anschlußflächen (3) annähernd planparallel in einer Oberfläche des Trägerbandes (4) liegen, derart, daß die elektrischen Anschlußflächen (3) zumindest nach oben hin vollständig abgedeckt sind, während die später von außerhalb der fertigen Karte zugänglichen Anschlußflächen nicht abgedeckt werden,
- Einlegen des Trägerbandes (4) mit einem elektronischen Modul (2) in ein Spritzgießwerkzeug (7) mit einer Kavität (8) entsprechend einer herzustellenden Chipkarte (1) derart, daß die Unterseiten der elektrischen Anschlußflächen (3) bzw. die Unterseite (5) des Modules (2) durch eine über das Trägerband (4) bewirkte Einspannung in einer vorgegebenen Position an einer flächig ausgebildeten Seite des Spritzgießwerkzeuges (7) plaziert werden,
- Einspritzen eines Thermoplasten aus der gleichen Werkstoffgruppe, aus der das Trägerband (4) hergestellt ist, in das geschlossene Spritzgießwerkzeug (7) zur Herstellung der Chipkarte (1) mit gleichzeitiger Umhüllung des elektronischen Modules (2), wobei der Thermoplast derart eingespritzt wird, daß das Trägerband (4) an die flächig ausgebildete Innenwand des Spritzgießwerkzeuges (7), auf der das Modul (2) positioniert ist, angedrückt wird und das Trägerband (4) mit dem spritzgegossenen Kartenkörper integral verschmilzt,
- Entnahme der hergestellten Chipkarte (1) und Weitertransport des Trägerbandes (4), bis das folgende, darauf befindliche elektronische Modul (2) im Spritzgießwerkzeug positioniert ist.

2. Verfahren nach Anspruch 1, bei dem für Trägerband (4) und Chipkarte (1) ein Polycarbonat (PC) als Thermoplast verwendet wird.

3. Verfahren nach Anspruch 1, bei dem für Trägerband (4) und Chipkarte (1) ein Acrylnitril-Butadien-Styrol (ABS) verwendet wird.

4. Verfahren nach Anspruch 1, bei dem für Trägerband (4) und Chipkarte (1) ein Styrolbutadien (SB) verwendet wird.

5. Verfahren nach einem der vorhergehenden Ansprüche, bei dem die Befestigung der elektrischen Anschlußflächen (3) an dem Trägerband (4) mittels Klebung geschieht.

6. Verfahren nach einem der vorhergehenden Ansprüche, bei dem durch einen zwischen Trägerband (4) und der entsprechenden Innenwand des Spritzgießwerkzeuges (7) erzeugten Unterdruck das Trägerband (4) zusätzlich fixiert wird.

7. Verfahren nach einem der vorhergehenden Ansprüche, bei dem zur Montage der elektronischen Module (2) auf dem Trägerband (4) eine dem Umriß des Grundkörpers des Modules (2) entsprechende Aussparung im Trägerband (4) ausgestanzt wird, das Modul (2) darin eingesteckt und die nach oben zeigenden Seiten der elektrischen Anschlußflächen (3) mit dem Trägerband (4) verklebt werden.

8. Verfahren nach einem der Ansprüche 1 bis 6, bei dem zur Montage der elektronischen Module (2) auf dem Trägerband (4) der Grundkörper des Modules (2) durch Tiefziehen des Trägerbandes (4) nach oben und seitwärts in dieses eingebettet wird und die nach oben zeigenden Seiten der elektrischen Anschlußflächen (3) mit dem Trägerband (4) verklebt werden.

9. Verfahren nach einem der Ansprüche 7 oder 8, bei dem durch thermische Vorverformung des Trägerbandes (4) Klebstoffdepots (9) erzeugt werden.

## Claims

1. Method for manufacturing chip cards (1) by injection moulding, the chip cards (1) comprising a flexible card body with an integrated electronic module (2) as the data carrier and having externally accessible electrical terminal faces (3), which are connected to the module (2) and are placed in a predetermined position on the surface of a two-dimensionally formed side of the card body, comprising the following steps:
- mounting of packaged electronic modules (2), with electrical terminal faces (3) attached on their underside (5) or in the lower region and protruding laterally, on a carrier tape (4), consisting of a thermoplastic, the module (2) being positioned in relation to the carrier tape (4) and the downwardly pointing electrical terminal faces (3) lying approximately plane-parallel in a surface of the carrier tape (4), in such a way that the electrical terminal faces (3) are completely covered, at least upwards, while the terminal faces which are later accessible from outside the finished card are not covered,
- laying of the carrier tape (4) with an electronic module (2) into an injection mould (7) having a cavity (8) corresponding to a chip card (1) to be manufactured, in such a way that the undersides of the electrical terminal faces (3) and the underside (5) of the module (2) are placed in a predetermined position on a two-dimensionally formed side of the injection mould (7) by a clamping action effected via the carrier tape (4),
- injection of a thermoplastic from the same group of materials from which the carrier tape (4) is made into the closed injection mould (7) for manufacturing the chip card (1) while simultaneously encapsulating the electronic module (2), the thermoplastic being injected in such a way that the carrier tape (4) is pressed against the two-dimensionally formed inner wall of the injection mould (7) on which the module (2) is positioned, and the carrier tape (4) fuses integrally with the injection-moulded card body,
- removal of the manufactured chip card (1) and advancement of the carrier tape (4) until the following electronic module (2), located thereupon, is positioned in the injection mould.

2. Method according to Claim 1, in which a polycarbonate (PC) is used as the thermoplastic for the carrier tape (4) and the chip card (1).

3. Method according to Claim 1, in which an acrylonitrile-butadiene-styrene (ABS) is used for the carrier tape (4) and the chip card (1).

4. Method according to Claim 1, in which a styrene-butadiene (SB) is used for the carrier tape (4) and the chip card (1).

5. Method according to one of the preceding claims, in which the attachment of the electrical terminal faces (3) on the carrier tape (4) takes place by means of adhesion.

6. Method according to one of the preceding claims, in which the carrier tape (4) is additionally fixed by a negative pressure produced between the carrier tape (4) and the corresponding inner wall of the injection mould (7).

7. Method according to one of the preceding claims, in which, for mounting the electronic modules (2) on the carrier tape (4), a clearance corresponding to the outline of the basic body of the module (2) is punched out in the carrier tape (4), the module (2) is inserted therein and the upwardly pointing sides of the electrical terminal faces (3) are adhesively bonded to the carrier tape (4).

8. Method according to one of Claims 1 to 6, in which, for mounting the electronic modules (2) on the carrier tape (4), the basic body of the module (2) is embedded into the carrier tape (4) by thermoforming the latter upwards and sidewards and the upwardly pointing sides of the electrical terminal faces (3) are adhesively bonded to the carrier tape (4).

9. Method according to one of Claims 7 or 8, in which pockets of adhesive (9) are produced by thermal preforming of the carrier tape (4).

## Revendications

1. Procédé de fabrication de cartes (1) à puce par moulage par injection, les cartes (1) à puce étant constituées d'un élément de carte souple à module (2) électronique intégré, servant de support de données et comportant des surfaces (3) électriques de raccordement accessibles de l'extérieur, reliées au module (2), qui sont mises en place en une position prescrite à la surface d'un côté de l'élément de carte réalisé de manière plane, consistant en les étapes suivantes:
- on monte des modules (2) électroniques mis en boîte, comportant des surfaces (3) électriques de raccordement ménagées sur leur face (5) inférieure ou dans la zone inférieure et faisant salle latéralement, sur une bande (4) support en une matière thermoplastique, le module (2) étant mis en position par rapport à la bande (4) support et les surfaces (3) électriques de raccordement tournées vers le bas se trouvant, en ayant des faces à peu près planes et parallèles, sur une surface de la bande (4) support, de telle manière que les surfaces (3) électriques de raccordement sont totalement recouvertes au moins vers le haut, tandis que les surfaces de raccordement accessibles ultérieurement de l'extérieur de la carte finie ne sont pas couvertes,
- on insère la bande (4) support comportant un module (2) électronique dans un moule (7) pour injection comportant une empreinte (8) correspondant à une carte (1) à puce à produire, de telle manière que les faces inférieures des surfaces (3) électriques de raccordement et la face (5) inférieure du module (2) sont, par un serrage réalisé par l'intermédiaire de la bande (4) support, mises en place en une position prescrite, d'un côté du moule (7) pour injection réalisé de manière plane,
- on injecte une matière thermoplastique du même groupe de matériaux que celui, dont la bande (4) support est fabriquée, dans le moule (7) pour injection fermé, en vue de produire la carte (1) à puce tout en enrobant en même temps le module (2) électronique, la matière thermoplastique étant injectée de telle manière que la bande (4) support est pressée sur la paroi intérieure du moule (7) pour injection réalisée de manière plane, sur laquelle le module (2) est mis en position, et que, en fondant, la bande (4) support s'unit intégralement à l'élément de carte moulé par injection,
- on retire la carte (1) à puce produite et on continue de transporter la bande (4) support jusqu'à ce que le module (2) électronique suivant qui s'y trouve soit mis en position dans le moule pour injection.

2. Procédé suivant la revendication 1, dans lequel on utilise pour la bande (4) support et la carte (1) à puce un polycarbonate (PC) comme matière thermoplastique.

3. Procédé suivant la revendication 1, dans lequel on utilise pour la bande (4) support et la carte (1) à puce un acrylnitrile-butadiène-styrène (ABS).

4. Procédé suivant la revendication 1, dans lequel on utilise pour la bande (4) support et la carte (1) à puce un styrène-butadiène (SB).

5. Procédé suivant l'une des revendications précédentes, dans lequel on obtient la fixation des surfaces (3) électriques de raccordement à la bande (4) support par collage.

6. Procédé suivant l'une des revendications précédentes, dans lequel on immobilise de plus la bande (4) support par une dépression produite entre la bande (4) support et la paroi intérieure associée du moule (7) pour injection.

7. Procédé suivant l'une des revendications précédentes, dans lequel, pour monter les modules (2) électroniques sur la bande (4) support, on découpe dans la bande (4) support un évidement correspondant à la projection sur un plan horizontal de l'élément de base du module (2), on y enfile le module (2) et on colle à la bande (4) support les côtés tournés vers le haut des surfaces (3) électriques de raccordement.

8. Procédé suivant l'une des revendications 1 à 6, dans lequel, pour monter les modules (2) électroniques sur la bande (4) support, on enrobe l'élément de base du module (2) dans la bande (4) support par emboutissage profond de cette bande support vers le haut et latéralement et on colle à la bande (4) support les côtés tournés vers le haut des surfaces (3) électriques de raccordement.

9. Procédé suivant l'une des revendications 7 ou 8, dans lequel on produit des dépôts (9) de colle par une déformation thermique préalable de la bande (4) support.
